# EUROPÄISCHE PATENTSCHRIFT

(11) **EP 0 850 512 B1**
(45) Veröffentlichungstag und Bekanntmachung des Hinweises auf die Patenterteilung: **07.07.1999**
(21) Anmeldenummer: 96937987.4
(22) Anmeldetag: 03.09.1996
(51) Int. Cl.: H04B 1/40, H01Q 1/24

(54) **FUNKGERÄT MIT MEHREREN FREQUENZBEREICHEN**
RADIO APPARATUS WITH SEVERAL FREQUENCY RANGES
APPAREIL RADIO A PLUSIEURS PLAGES DE FREQUENCES

(30) Priorität: 15.09.1995 DE 19534332
(43) Veröffentlichungstag der Anmeldung: 01.07.1998
(73) Patentinhaber: SIEMENS AKTIENGESELLSCHAFT, 80333 München (DE)
(72) Erfinder: SCHOLZ, Ralf, D-82110 Germering (DE)
(86) Internationale Anmeldenummer: DE9601639
(87) Internationale Veröffentlichungsnummer: WO9710650

(56) Entgegenhaltungen:
- EP-A- 0 518 526
- US-A- 5 406 615

## Beschreibung

Die Erfindung betrifft ein Funkendgerät nach dem Oberbegriff des Anspruchs 1, wie z.B. aus US-A-5 406 615 bereits bekannt ist.

Es sind bereits Funkendgeräte und insbesondere Funkgeräte bekannt, die in unterschiedlichen Frequenzbereichen betreibbar sind. Diese bekannten Funkendgeräte sind mit mehreren funkbereichsindividuellen Antennen bzw. mit mehreren funkbereichsindividuellen Anpaß-Schaltungsanordnungen ausgestattet. Ein solches Gerät ist aus der US-PS 4,989,230 bekannt. Das bekannte Gerät ist ein Telefonendgerät für ein privates Schnurlostelefonsystem und ein öffentliches Mobilfunksystem und weist zwei systemindividuelle Antennen oder nur eine Antenne auf. Bei Verwendung nur einer Antenne ist zwischen dieser und einem Schnurlostelefon-Empfangsschaltungsteil bzw. einem Schnurlostelefon-Senderschaltungsteil ein Tiefpaß-Filter und zwischen Antenne und Mobilfunk-Empfangsschaltungsteil bzw. Mobilfunk-Senderschaltungsteil ein Hochpaß-Filter geschaltet.

Es sind auch Funkgeräte, insbesondere für den Kurzwellenbereich, bekannt, die eine Antenne mit eingefügten Sperrelementen (z.B. Induktivitäten) aufweisen, so daß Antennenteile für bestimmte Frequenzbereiche wirksam bzw. unwirksam geschaltet werden können.

Ferner sind stationäre Funkendgeräte mit Breitbandantennen bekannt, deren relativ große mechanische Abmessungen sich für tragbare Funkendgeräte als unpraktikabel erweisen.

Ausgehend von diesem Stand der Technik liegt der Erfindung die Aufgabe zugrunde, ein Funkendgerät der eingangs genannten Art anzugeben, das in einfacher Weise aufgebaut ist.

Diese Aufgabe wird erfindungsgemäß durch ein Funkendgerät gelöst, das in den Ansprüchen definiert ist.

Das erfindungsgemäße Funkendgerät ist mit einer Mehrzahl von Funkteilen verbunden. Unabhängig von der Anzahl der Frequenzbereiche, in denen das erfindungsgemäße Funkendgerät betreibbar ist, weist dieses nur genau eine Antenne auf.

Eine Ausführungsform der Erfindung wird nun anhand der Zeichnungen beschrieben.

Es zeigt
- Fig. 1: ein Funkendgerät mit einer ersten und zweiten Anpaß-Schaltungsanordnung gemäß der vorliegenden Erfindung;
- Fig. 2: ein Prinzipschaltibild einer Gesamtanpaß-Schaltungsanordnung, die eine erste und eine zweite Anpaß-Schaltungsanordnung aufweist; und
- Fig. 3: ein Ausführungsbeispiel einer Gesamtanpaß-Schaltungsanordnung, die eine erste und eine zweite Anpaß-Schaltungsanordnung aufweist.

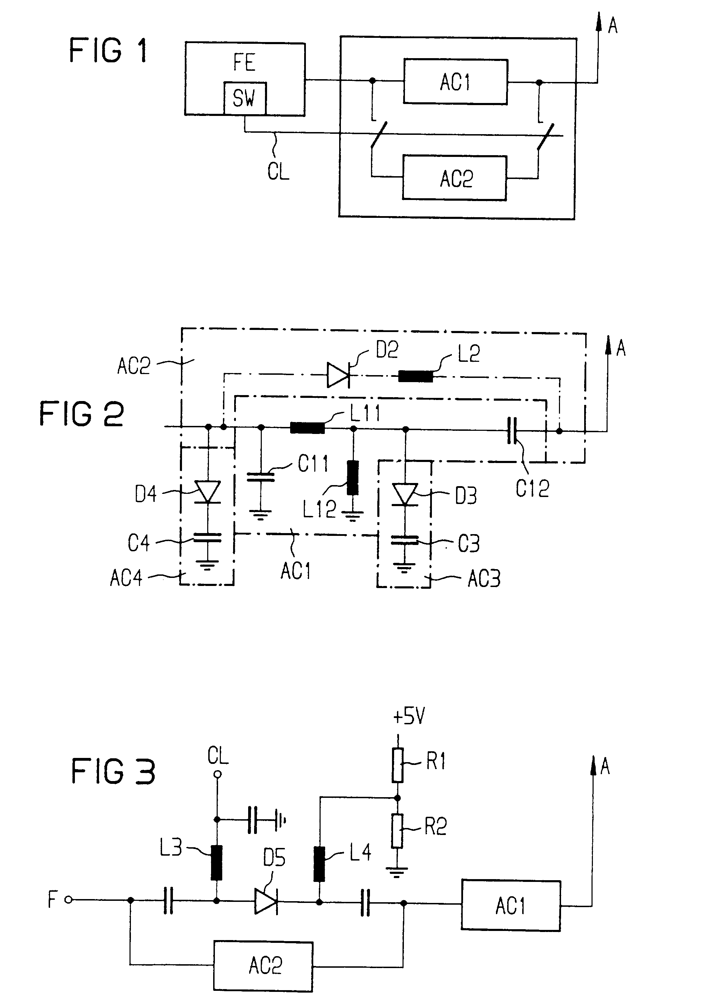

Das in Fig. 1 dargestellte Funkendgerät FE, das das Senden und den Empfang von Signalen in unterschiedlichen Frequenzbereichen ermöglicht, weist eine Einrichtung SW zur Umschaltung des Funkendgerätes in jeweils einen Frequenzbereich auf. Weiterhin weist das Funkendgerät eine Antennen-Anordnung A auf, die lediglich aus einer Antenne besteht. Mit dem Funkendgerät FE verbunden, bzw. in dieses integriert ist eine erste Antennenanpassungs-Schaltungsanordnung AC1 für die Anpassung des Funkendgerätes an einen ersten Frequenzbereich sowie eine zusätzliche zweite Antennenanpaß-Schaltungsanordnung AC2.

Durch Betätigung der Umschalteinrichtung SW ist über eine Steuerleitung CL die zweite Anpaß-Schaltungsanordnung AC2 an die erste AnpaßSchaltungsanordnung AC1 anschaltbar.

Beide Anpaß-Schaltungsanordnungen AC1 und AC2 bilden in diesem Schaltungszustand eine Gesamtanpaß-Schaltungsanordnung für die Anpassung des Funkendgerätes an einen zweiten Frequenzbereich.

Weitere Antennenanpaß-Schaltungsanordnungen, die in Fig. 1 nicht dargestellt sind, sind an die erste und/oder zweite Anpaß-Schaltungsanordnung AC1, AC2 anschaltbar, so daß Gesamtanpaß-Schaltungsanordnungen gebildet werden können, die der Anpassung des Funkendgerätes an weitere Frequenzbereiche dienen.

In Fig. 2 ist schematisch eine erste Anpaß-Schaltungsanordnung AC1, eine zweite Anpaß-Schaltungsanordnung AC2, eine dritte Anpaß-Schaltungsanordnung AC3 sowie eine vierte Anpaß-Schaltungsanordnung AC4 dargestellt.

Die erste Anpaß-Schaltungsanordnung AC1 besteht beispielsweise aus den Induktivitäten L11 und L12 sowie aus den Kondensatoren C11 und C12.

Die Schaltungsanordungen AC1, AC2, AC3 und AC4 sind mit der Steuerleitung CL (Fig. 1, 3) verbunden, wie dies in Fig. 3 hinsichtlich der Diode D5 dargestellt ist. Die Steuerleitung CL kann mit einer vorgebbaren Spannung bzw. einem vorgebbaren Strom beaufschlagt werden, wie dies anhand von Fig. 3 beschrieben wird.

Die zweite, dritte und vierte Anpaß-Schaltungsanordnung AC2, AC3, AC4 weisen eingangsseitig ein steuerbares Bauelement (D2, D3, D4) auf, das insbesondere durch eine PIN-Diode gebildet ist.

Durch die Beaufschlagung der Steuerleitung CL mit einer vorgebbaren Spannung bzw, mit einem vorgebbaren Strom wird mindestens eine der PIN-Dioden D2, D3, D4 auf Durchgang geschaltet. Hierdurch werden die der jeweiligen PIN-Diode nachgeschalteten Bauelemente an die erste Anpaß-Schaltungsanordnung AC1 angeschaltet.

Der Diode D2 ist eine Induktivität L2 nachgeschaltet und den Dioden D3 und D4 ist jeweils ein Kondensator C3 bzw. C4 nachgeschaltet.

Durch die Beaufschlagung der Steuerleitung mit einer frequenzbereichsindividuellen Spannung bzw. mit einem frequenzbereichsindividuellen Strom ist eine Gesamtanpaß-Schaltungsanordnung herstellbar, die aus folgenden acht Anpaß-Schaltungsanordnungen besteht:
AC1;
AC1 und AC2;
AC1 und AC3;
AC1 und AC4;
AC1, AC2 und AC3;
AC1, AC2 und AC4;
AC1, AC3 und AC4;
AC1, AC2, AC3 und AC4.

Damit läßt sich diese Ausführungsform des erfindungsgemäßen Funkendgeräts an acht unterschiedliche Frequenzbereiche anpassen.

In Fig. 3 ist eine Schaltungsanordnung dargestellt, die aus einer bekannten ersten Anpaß-Schaltungsanordnung AC1 sowie aus einer zweiten Anpaß-Schaltungsanordnung AC2 besteht. Eingangsseitig (Eingang F) ist die Schaltungsanordnung mit der eigentlichen Funkschaltungsanordnung verbunden. Die erste Schaltungsanordnung AC1 stellt die Anpassung der Antenne in einem ersten Frequenzbereich her. Die Gesamtanpaßschaltungsanordnung AC1 und AC2 paßt die Antenne in einem zweiten Frequenzbereich bestmöglich an. Durch Überbrückung der Anpaßschaltung AC2 mittels einer Diode D5 wird von der optimalen Anpassung in dem zweiten Frequenzbereich zur optimalen Anpassung in dem ersten Frequenzbereich gewechselt, wobei diese Anpassung durch AC2 erfolgt. Dabei wird an der Steuerleitung CL eine positive Spannung angelegt, durch die die Diode D5 durchgesteuert wird, wobei der Strom so hoch angesetzt wird, daß die Intermodulationsprodukte ausreichend gering sind.

Die Diode D5 ist so ausgelegt, daß sie vollständig sperrt, wenn an der Steuerleitung CL Null Volt anliegt. Hierzu wird die Kathode der Diode auf ein Zwischenpotential gelegt, das zwischen dem Potential der Steuerleitung CL und Null Volt liegt. Dieses Potential ist so gewählt, daß bei angelegtem Steuersignal die Durchbruchspannung der Diode ausreichend überschritten ist und daß, wenn die Steuerleitung CL auf Null Volt liegt, die Kathode der Diode gegenüber der Anode auf positivem Gleichspannungspotential liegt.

Verwendet man als PIN-Diode D5 eine Diode BAR64 der Firma Siemens AG, wird dieses Zwischenpotential auf 1 Volt bis 1,5 Volt gesetzt.

Bei der in Fig. 3 dargestellten Schaltungsanordnung ist das steuerbare Bauelement (D5) weder in der ersten Anpaß-Schaltungsanordnung AC1 noch in der zweiten Anpaß-Schaltungsanordnung AC2 angeordnet; ganz allgemein gilt, daß das steuerbare Bauelement (z.B. D5, D2) der ersten Anpaß-Schaltungsanordnung zugeordnet ist.

Die Erfindung ermöglicht also die Verwendung mechanisch einfach aufgebauter Antennen, die im Stand der Technik bereits für Mobilfunktelefone allerdings nur für den Betrieb eines Frequenzbereiches benutzt werden. Die Erfindung ermöglicht die Anpassung einer Antenne an beliebige Frequenzbereiche. Diese Frequenzbereiche können unmittelbar benachbart oder auch beliebig getrennt sein. Eine obere Grenzfrequenz, bis zu welcher eine Anpassung erfindungsgemäß erfolgen kann, ist lediglich durch die den verwendeten Bauelementen immanenten parasitären Verluste bestimmt.

## Patentansprüche

1. Funkendgerät (FE), insbesondere tragbares Funkendgerät, zum Senden und zum Empfang von Signalen in unterschiedlichen Frequenzbereichen, mit einer Einrichtung (SW) zur Umschaltung des Funkendgerätes in jeweils einen Frequenzbereich, mit einer Antennen-Anordnung (A) und einer ersten Antennenanpaß-Schaltungsanordnung (AC1) für die Anpassung des Funkendgerätes an einen ersten Frequenzbereich, wobei die Antennenanordnung (A) nur eine Antenne aufweist dadurch **gekennzeichnet**, daß mindestens eine zweite Antennenanpaß-Schaltungsanordnung (AC2) vorgesehen ist, die bei einer Umschaltung des Funkendgerätes von dem ersten Frequenzbereich in einen zweiten Frequenzbereich an die erste Antennenanpaß-Schaltungsanordnung (AC1) anschaltbar ist.

2. Funkendgerät nach Anspruch 1, dadurch **gekennzeichnet,** daß der ersten Antennenanpaß-Schaltungsanordnung ein von der Umschalteinrichtung (SW) steuerbares Bauelement (D5, D2) zugeordnet ist.

3. Funkendgerät nach Anspruch 1 oder 2, dadurch **gekennzeichnet,** daß
die zweite Antennenanpaß-Schaltungsanordnung (AC2) neben einem Anpaß-Schaltungsteil (R2) mindestens das von der Umschaltungseinrichtung (SW) steuerbares Bauelement aufweist, und
die erste Antennenanpaß-Schaltungsanordnung (AC1) in der Weise mit dem steuerbaren Bauelement der zweiten Antennenanpaß-Schaltunganordnung (AC2) verbunden ist, und daß die erste Antennenanpaß-Schaltungsanordnung (AC1) bei ihrer Aktivierung mit der zweiten Antennenanpaß-Schaltungsanordnung (AC2) eine Gesamtanpaß-Schaltungsanordnung bildet.

4. Funkendgerät nach einem der Ansprüche 2 oder 3, dadurch **gekennzeichnet,** daß das steuerbare Bauelement eine PIN-Diode (D2) ist.

## Claims

1. Radio terminal (FE), in particular a portable radio terminal, for transmitting and for receiving signals in different frequency bands, having a device (SW) for switching the radio terminal to in each case one frequency band, having an antenna arrangement (A) and having a first antenna matching circuit arrangement (AC1) for matching the radio terminal to a first frequency band, with the antenna arrangement (A) having only one antenna, characterized in that at least a second antenna matching circuit arrangement (AC2) is provided, which can be connected to the first antenna matching circuit arrangement (AC1) when the radio terminal is switched from the first frequency band to a second frequency band.

2. Radio terminal according to Claim 1, characterized in that the first antenna matching circuit arrangement is assigned a component (D5, D2) which can be controlled by the changeover device (SW).

3. Radio terminal according to Claim 1 or 2, characterized in that the second antenna matching circuit arrangement (AC2) has, in addition to a matching circuit section (R2), at least the component which can be controlled by the changeover device (SW), and the first antenna matching circuit arrangement (AC1) is connected to the controllable component of the second antenna matching circuit arrangement (AC2) in such a manner that, when the first antenna matching circuit arrangement (AC1) is activated, it forms an overall matching circuit arrangement with the second antenna matching circuit arrangement (AC2).

4. Radio terminal according to one of Claims 2 or 3, characterized in that the controllable component is a PIN diode (D2).

## Revendications

1. Terminal radio (FE), en particulier terminal radio portatif, destiné à émettre et à recevoir des signaux dans différentes plages de fréquence, comprenant un dispositif (SW) servant à commuter le terminal radio dans une plage de fréquence, un dispositif d'antenne (A) et un premier montage adaptateur d'antenne (AC1) pour l'adaptation du terminal radio à une première plage de fréquence, le dispositif d'antenne (A) ne comprenant qu'une seule antenne, caractérisé en ce qu'il est prévu au moins un deuxième montage adaptateur d'antenne (AC2) qui, en réponse à une commutation du terminal radio de la première plage de fréquence à une deuxième plage de fréquence, peut être connecté au premier montage adaptateur d'antenne (AC1).

2. Terminal radio selon la revendication 1, caractérisé en ce qu'un composant (D5, D2) pouvant être commandé par le dispositif de commutation (SW), est associé au premier montage adaptateur d'antenne.

3. Terminal radio selon la revendication 1 ou 2, caractérisé en ce que le deuxième montage adaptateur d'antenne (AC2) comprend, en supplément d'une partie (R2) du montage adaptateur, au moins le composant pouvant être commandé par le dispositif de commutation (SW), et le premier montage adaptateur d'antenne (AC1) est connecté au composant pouvant être commandé du deuxième montage adaptateur d'antenne (AC2) de telle façon que le premier montage adaptateur d'antenne (AC1), lorsqu'il est activé, forme un montage adaptateur combiné avec le deuxième montage adaptateur d'antenne (AC2).

4. Terminal radio selon l'une des revendications 2 ou 3, caractérisé en ce que le composant pouvant être commandé est une diode PIN (D2).
